# EUROPEAN PATENT APPLICATION

(11) **EP 1 722 368 A1**
(43) Date of publication of application: **15.11.2006**
(21) Application number: 04771365.6
(22) Date of filing: 06.08.2004
(51) Int. Cl.: G11B 20/18, G11B 20/10

(54) **INFORMATION RECORDING/REPRODUCING DEVICE AND INFORMATION RECORDING/REPRODUCING METHOD**

(30) Priority: 03.03.2004 JP 2004059616
(71) Applicant: Ricoh Company, Ltd., Tokyo 143-8555 (JP)
(72) Inventor: YAMADA, Yousuke, Sagamihara-shi, Kanagawa 2291123 (JP)
(74) Representative: Mounteney, Simon James
(86) International application number: PCT/JP2004/011366
(87) International publication number: WO 2005/086163

(57) **Abstract**

Before starting data recording/playback, a determination unit (13) determines whether data to be recorded/replayed correspond to data to be recorded/replayed in real time or data to be recorded/replayed with accuracy, and transmits the determination result to a CPU (10). When it is determined that the data to be recorded/replayed correspond to data to be recorded/replayed with accuracy, the CPU (10) decides to execute a process upon occurrence of an error during data recording/playback that involves performing retry operations a predetermined number of times to retry the data recording/playback operations on an error generated area. When it is determined that the data to be recorded/replayed correspond to data to be recorded/replayed in real time, the CPU (10) decides to execute a process that involves ignoring an error that occurs during data recording/playback and proceeding with the recording/playback operations. Thus, before starting data recording/playback, it is possible to decide an error process to be executed upon occurrence of an error during data recording/playback according to the type of the data that are to be recorded/replayed.

## Description

### TECHNICAL FIELD

The present invention relates to an information recording/playback apparatus such as a CD drive or a DVD drive for recording/replaying information on/from a recording medium such as a CD, a CD-ROM, a CD-R, a CD-RW, a DVD-ROM, a DVD-R, a DVD-RW, a DVD+R, a DVD+RW, or a DVD-RAM; and an information recording/replaying method for recording/replaying information on/from such a recording medium.

### BACKGROUND ART

In the conventional art, when occurrence of an error interruption is detected during data playback, an information recording/playback apparatus may refrain from performing error correction on replay data that may not be greatly affected by the error correction, and perform error correction on replay data that may be greatly affected by the error correction (e.g., see Japanese Laid-Open Patent Publication No. 2-223367).

In the conventional information recording/playback apparatus, an error process may be switched after data playback or recording is started and error correction is detected such that error correction is not performed on replay data that may not be greatly affected by the error correction while error correction is performed on replay data that may be greatly affected by the error correction. The conventional information recording/playback apparatus cannot be controlled to record/replay certain types of data in real time regardless of whether an error occurs during recording/replay of the data, and prioritize accuracy in replaying and recording other types of data, for example.

### DISCLOSURE OF THE INVENTION

An embodiment of the present invention solves one or more of the above problems, and provides a technique for deciding an error process to be executed upon occurrence of an error during data recording/playback, the error process being decided before the data recording/playback is started according to the type of the data that are to be recorded/replayed.

According to one specific embodiment of the present invention, an information recording/playback apparatus is provided that records/replays data on/from a recording medium, the apparatus including:
determination means for determining before data recording/playback is started whether the data correspond to data to be recorded/replayed in real time or data to be recorded/replayed with accuracy; and
control means for deciding a process to be executed upon error occurrence during the data recording/playback based on a determination result obtained by the determination means.

According to another specific embodiment of the present invention, an information recording/playback method is provided for recording/replaying data on/from a recording medium, the method including:
a determination step performed before data recording/playback is started for determining whether the data correspond to data to be recorded/replayed in real time or data to be recorded/replayed with accuracy; and
a control step for deciding a process to be executed upon error occurrence during the data recording/playback based on a determination result obtained in the determination step.

In the information recording/playback apparatus and the information recording/playback method according to embodiments of the present invention, an error process may be decided according to the type of the data to be recorded/replayed before data recording/playback is started.

### BRIEF DESCRIPTION OF THE DRAWINGS

FIG. 1 is a block diagram showing a configuration of an optical disk drive as an information recording/playback apparatus according to an embodiment of the present invention;
FIG. 2 is a flowchart illustrating processes performed when the power of the optical disk drive of FIG. 1 is turned on and an optical disk is loaded; and
FIG. 3 is a diagram illustrating MPEG1 and MPEG2 formats for video data.

### BEST MODE FOR CARRYING OUT THE INVENTION

In the following, preferred embodiments of the present invention are described with reference to the accompanying drawings.

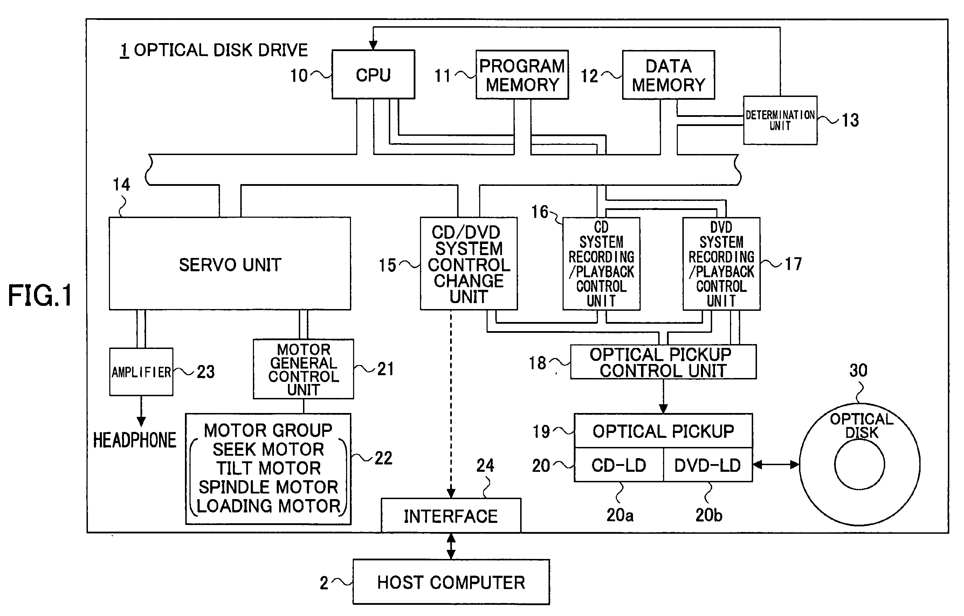

FIG. 1 is a block diagram showing a configuration of an optical disk drive as an information recording/playback apparatus according to an embodiment of the present invention.

The illustrated optical disk drive 1 may be an information recording/playback apparatus such as a CD drive or a DVD drive that records/replays data on/from a recording medium such as a CD, a CD-ROM, a CD-R, a CD-RW, a DVD-ROM, a DVD-R, a DVD-RW, DVD+R, a DVD+RW, or a DVD-RAM. The optical disk drive 1 is connected to and establishes data communication with a host computer 2 such as a personal computer (PC) or a recorder.

The optical disk drive 1 includes a CPU 10, a program memory 11, a data memory 12, a determination unit 13, a DSP and servo unit 14, a CD/DVD system control change unit 15, a CD system recording/playback control unit 16, a DVD system recording/playback control unit 17, an optical pickup control unit 18, an optical pickup 19, a laser diode 20, a motor general control unit 21, a motor group 22, an amplifier 23, and an interface 24.

The CPU 10 performs overall control of the optical disk drive 1 by executing programs stored in the program memory 11 including a control process according to an embodiment of the present invention.

The program memory 11 stores programs to be executed by the CPU 10. The data memory 12 stores data (information) received from the host computer 2 that are to be recorded on an optical disk 30 and data replayed from the optical disk 30 that are to be transmitted to the host computer 2.

The determination unit 13 performs a determination process by executing a program stored in the program memory 11 when the control process according to an embodiment of the present invention is performed.

In other words, the program memory 11 stores programs that enable a computer to execute processes before data recording/playback on/from a recording medium is started, such processes including a determination process for determining whether the data to be recorded/replayed correspond to data to be recorded/replayed in real time or data to be recorded/replayed with accuracy, and a control process for deciding an error process that is to be executed upon occurrence of an error during data recording/playback based on the determination made in the determination process.

In one embodiment, the determination process to be executed before data recording/replaying may include the steps of determining that the data are to be recorded/replayed in real time if predetermined information for the data is detected, and determining that the data are to be recorded/replayed with accuracy if the predetermined information for the data is not detected.

In one preferred embodiment, the data to be recorded/replayed in real time may be video data.

In a further embodiment, the video data to be recorded/replayed in real time may be data compressed according to a moving image compression standard.

In another preferred embodiment, the predetermined information for the data to be recorded/replayed may be a sequence header.

In another embodiment, the control process may include the steps of deciding the error process to be executed upon occurrence of an error during data recording/playback such that when it is determined in the determination process that the data to be recorded/replayed correspond to data to be recorded/replayed with accuracy, a process is selected for performing retry operations a predetermined number of times to retry the data recording/playback operations on an error generated area; and when it is determined in the determination step that the data to be recorded/replayed are to be recorded/replayed in real time, a process is selected for performing the retry operations a number times that is less than the predetermined number.

In another embodiment, the control process may include the steps of deciding the error process to be executed upon occurrence of an error during data recording/playback such that when it is determined in the determination process that the data to be recorded/replayed correspond to data to be recorded/replayed with accuracy, a process is selected for performing retry operations a predetermined number of times to retry the data recording/playback operations on an error generated area; and when it is determined in the determination step that the data to be recorded/replayed correspond to data to be recorded/replayed in real time, a process is selected for not performing the retry operations and proceeding with the data recording/playback operations.

In another embodiment, the control process may include the steps of deciding the error process to be executed upon occurrence of an error during data recording/playback such that when it is determined in the determination process that the data to be recorded/replayed correspond to data to be recorded/replayed with accuracy, a process is selected for performing retry operations a predetermined number of times to retry the data recording/playback operations on an error generated area; and when it is determined in the determination step that the data to be recorded/replayed correspond to data to be recorded/replayed in real time, a process is selected for ignoring the error that occurs during data recording/playback and proceeding with the data recording/playback operations.

In another embodiment, the control process may include the steps of deciding the error process to be executed upon occurrence of an error during data recording/playback such that when it is determined in the determination process that the data to be recorded/replayed correspond to data to be recorded/replayed with accuracy, a process is selected for performing retry operations a predetermined number of times to retry the data recording/playback operations on an error generated area; and when it is determined in the determination step that the data to be recorded/replayed correspond to data to be recorded/replayed in real time, a process is selected for skipping the error generated area and proceeding with the data recording/playback operations.

Before data recording/playback on/from a recording medium is started, the determination unit 13 executes the program stored in the program memory 11 for performing the determination process to determine whether the data to be recorded/replayed correspond to data to be recorded/replayed in real time or data to be recorded/replayed with accuracy.

The CPU 10 executes the program stored in the program memory 11 for performing the control process to decide on the error process to be executed upon occurrence of an error during data recording/playback based on the determination result of the determination process.

In one embodiment, the determination unit 13 may perform the determination process according to the relevant program to determine that the data to be recorded/replayed correspond to data to be recorded/replayed in real time when it detects the predetermined information for the data to be recorded/replayed, and determine that the data to be recorded/replayed correspond to data to be recorded/replayed with accuracy when it does not detect such predetermined information for the data.

In one preferred embodiment, the data to be recorded/replayed in real time may be video data.

In a further embodiment, the video data may be data compressed according to a moving image compression standard.

In another preferred embodiment, the predetermined information may be a sequence header.

In another embodiment, the CPU 10 may perform the control process according to the relevant program such that when it is determined in the determination process that the data to be recorded/replayed correspond to data to be recorded/replayed with accuracy, a process is selected for performing retry operations a predetermined number of times upon occurrence of an error during data recording/playback to retry the data recording/playback operations on an error generated area; and when it is determined in the determination step that the data to be recorded/replayed correspond to data to be recorded/replayed in real time, a process is selected for performing the retry operations a number times that is less than the predetermined number.

In another embodiment, the CPU 10 may perform the control process according to the relevant program such that when it is determined in the determination process that the data to be recorded/replayed correspond to data to be recorded/replayed with accuracy, a process is selected for performing retry operations a predetermined number of times upon occurrence of an error during data recording/playback to retry the data recording/playback operations on an error generated area; and when it is determined in the determination step that the data to be recorded/replayed correspond to data to be recorded/replayed in real time, a process is selected for not performing the retry operations and proceeding with the data recording/playback operations.

In another embodiment, the CPU 10 may perform the control process according to the relevant program such that when it is determined in the determination process that the data to be recorded/replayed correspond to data to be recorded/replayed with accuracy, a process is selected for performing retry operations a predetermined number of times upon occurrence of an error during data recording/playback to retry the data recording/playback operations on an error generated area; and when it is determined in the determination step that the data to be recorded/replayed correspond to data to be recorded/replayed in real time, a process is selected for ignoring the error that occurs during data recording/playback and proceeding with the data recording/playback operations.

In another embodiment, the CPU 10 may perform the control process according to the relevant program such that when it is determined in the determination process that the data to be recorded/replayed correspond to data to be recorded/replayed with accuracy, a process is selected for performing retry operations a predetermined number of times upon occurrence of an error during data recording/playback to retry the data recording/playback operations on an error generated area; and when it is determined in the determination step that the data to be recorded/replayed correspond to data to be recorded/replayed in real time, a process is selected for skipping the error generated area at which an error occurs during data recording/playback and proceeding with the data recording/playback operations.

The DSP and servo unit 14 includes a DSP as a microprocessor incorporated in the optical disk drive 1 that is dedicated to processing audio and image data in place of the CPU 10, and a servo unit that controls the motor general control unit 21 and controls movement of the optical pickup 19 on the rotating optical disk 30.

The CD/DVD system change unit 15 switches to control by the CD system recording/playback control unit 16 when the optical disk 30 is a CD type disk such as a CD, a CD-ROM, a CD-R, or a CD-RW, and switches to control by the DVD system recording/playback control unit 17 when the optical disk 30 is a DVD type disk such as a DVD-ROM, a DVD-R, a DVD-RW, a DVD+R, a DVD+RW, or a DVD-RAM.

The CD system recording/playback control unit 16 controls data recording/playback on/from the optical disk 30 based on laser beams emitted by a CD-LD 20a of the LD 20.

The DVD system recording/playback control unit 17 controls data recording/playback on/from the optical disk 30 based on laser beams emitted from a DVD-LD 20b of the LD 20.

The optical pickup control unit 18 controls the laser emission of the CD-LD 20a and DVD-LD 20b of the LD 20 that is incorporated in the optical pickup 19.

The optical pickup 19 performs data recording/playback on/from the optical disk 30 by irradiating laser beams from the LD 20.

The LD 20 uses the CD-LD 20a when the optical disk 30 is a CD type disk, and uses the DVD-LD 20b when the optical disk 30 is a DVD type disk.

The motor general control unit 21 controls drive operations of motors of the motor group 22.

The motor group 22 includes a spindle motor for rotating the optical disk 30, a loading motor for loading and ejecting the optical disk 30, a tilt motor for controlling the position of the optical pickup 19, and a seek motor for enabling seek operations by the optical pickup 19, for example.

The amplifier amplifies data replayed from the optical disk 30 such as music data and outputs the amplified data to a head phone, for example.

The interface 24 controls data exchange between the optical disk drive 1 and the host computer 2.

The optical disk 30 is a recording medium such as a CD, a CD-ROM, a CD-R, a CD-RW, a DVD-ROM, a DVD-R, a DVD-RW, a DVD+R, a DVD+RW, or a DVD-RAM.

The host computer 2 includes a microcomputer that is made up of a CPU, a ROM, and a RAM, for example. The host computer 2 issues commands for recording/replaying data to the optical disk drive 1, outputs data to be recorded by the optical disk drive 1, and receives data replayed by the optical disk drive 1.

In the following, overall operations of the optical disk drive are described.

In the case of replaying data, the spindle motor of the motor group 22 controlled by the motor general control unit 21 is rotated to increase the rotational speed of the optical disk 30 to a predetermined rotational speed.

Then, the optical pickup 19 is moved and placed on the optical disk 30 by the motor general control unit 21 and the optical pickup control unit 18, and position control is performed on the optical pickup 19 by the tilt motor.

In this way, the mechanical system of the optical disk drive 1 may be ready for read operations.

Then, replayed data are converted from analog data to digital data via the optical pickup 19, and the converted data are input to the data memory 12. The input data are then transferred to the host computer 2 via the interface 24.

In the case of recording data, the same preparatory procedures as described above are performed on the optical disk drive 1 after which data to be recorded are received from the host computer 2 and temporarily stored in the data memory 12. Based on such data, the LD 20 emits laser beams on the optical disk 30 to record the data thereon.

In one embodiment, if the CPU 10 has adequate processing capabilities, the determination process according to an embodiment of the present invention may be performed by the CPU 10. In this case, the determination unit 13 does not have to be included in the optical disk drive 1 so that the circuit configuration may be simplified.

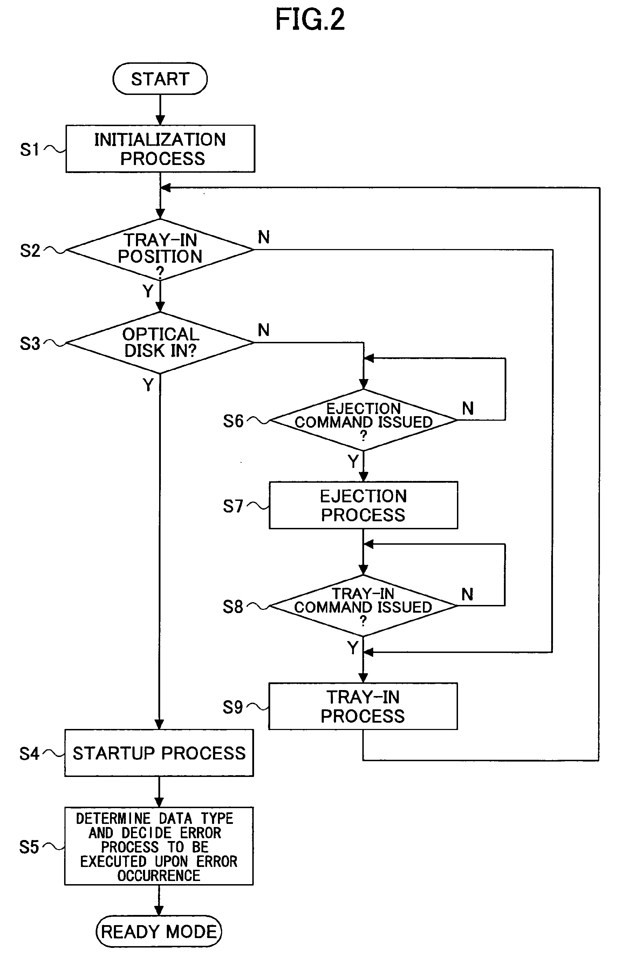

FIG. 2 is a flowchart illustrating processes of the optical disk drive 1 when the power is turned on and an optical disk is loaded.

When the power of the optical disk drive 1 is turned on, the CPU 10 performs an initialization process in step S1, and determines whether a tray-in position is maintained by the optical disk drive 1 in step S2. It is noted that the tray-in position refers to the position of the optical disk drive 1 in a case where a tray for holding an optical disk and loading the optical disk into the optical disk drive 1 is accommodated within the optical disk drive 1.

When it is determined in step S2 that the optical disk drive 1 is maintained at the tray-in position, namely, the position at which the tray is accommodated within the optical disk drive 1, the CPU 10 determines whether an optical disk is on the tray in step S3. Specifically, a determination is made as to whether an optical disk has been placed on the tray in step S3. If it is determined in step S3 that an optical disk is not on the tray, the process moves on to step S6 where the CPU 10 determines whether an ejection command has been issued. If an ejection command has been issued, the process moves on to step S7 where the CPU 10 performs an ejection process to eject the tray out of the optical disk drive 1 after which the process moves on to step S8 where the CPU 10 determines whether a tray-in command has been issued. If a tray-in command is issued, the process moves on to step S9 where the CPU 10 performs a tray-in process of inserting the tray into the optical disk drive 1 after which the process goes back to step S2.

If it is determined in step S3 that an optical disk is placed on the tray, the process moves on to step S4 where the CPU 10 performs a startup process to start rotating the optical disk. Further, in step S5, the CPU 10 performs a process of checking the type of the optical disk, the recording/playback speed of the optical disk, and the intensity of the laser beam to be irradiated on the optical disk. In the present embodiment, data recording/playback is performed after such a process is performed. Specifically, a data type determination process is performed for determining whether the data to be recorded/replayed correspond to data to be recorded/replayed in real time or data to be recorded/replayed with accuracy, and a control process is performed for deciding a process to be executed when an error occurs during data recording/playback based on the determination result after which the optical disk drive 1 may be in ready mode.

In one preferred embodiment, the data type determination process of step S5 determines that the data to be recorded/replayed correspond to data to be recorded/replayed in real time upon detecting predetermined information for the data, and determines that the data to be recorded/replayed correspond to data to be recorded/replayed with accuracy when the predetermined information is not detected.

In one example, if the data to be recorded/replayed in real time are video data, a sequence header may be used as the predetermined information.

Presently, video data (video information) are generally compressed according to moving image compression standards such as the MPEG1 or MPEG2 standard and are recorded on the optical disk 30.

It is noted that according to the MPEG1 and MPEG2 techniques, predetermined information for decompressing compressed data is recorded in front of the video data.

Such predetermined information is referred to as a sequence header, which is distinguished from other information by a specific code and has information contents recorded in a specific order. By detecting such a sequence header, it may be determined that the ensuing data correspond to video data. On the other hand, when such a sequence header is not found, it may be determined that the ensuing data correspond to PC data, for example.

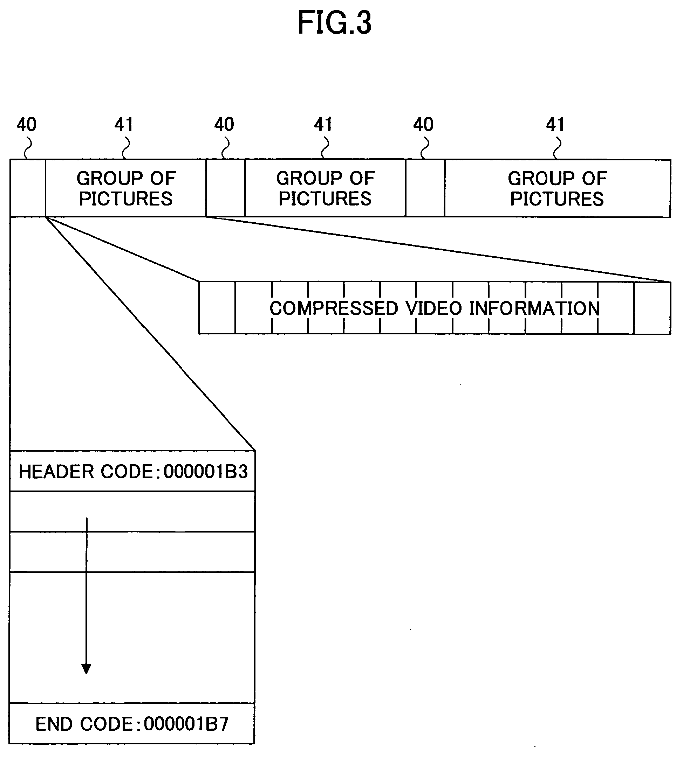

FIG. 3 is a diagram illustrating MPEG1 and MPEG2 video data formats. As is shown in this drawing, video data have a sequence header 40 arranged at the front followed by compressed video information (group of pictures) 41. It is noted that the MPEG1 and MPEG2 formats both have such a data configuration. Also, it is noted that although the group of pictures 41 may be omitted, the sequence header 40 is not omitted.

A header code "000001B3" in hex code is stored at the front of the sequence header 40, and an end code "000001B7" in hex code is stored at the end of the sequence header 40. Also, information is recorded in a predetermined order between the head and the end of the sequence header 40.

In the process of step S5, the determination unit 13 determines whether a sequence header is recorded in the data to be recorded/replayed before data recording/playback is started. When the sequence header is detected, the determination unit 13 determines that the data to be recorded/replayed correspond to video data that are preferably recorded/replayed in real time. On the other hand, when a sequence header is not detected, the determination unit 13 determines that the data to be recorded/replayed correspond to PC data that are preferably recorded/replayed with accuracy. The determination unit 13 then transmits its determination result to the CPU 10.

It is noted that once a determination is made as to whether a sequence header is included in the data currently subject to reading, the data correspond to either video data or PC data as is determined in the determination process, and the data type does not change during the data recording/playback process.

In one preferred embodiment, information items pertaining to the data recorded on the optical disk 30 may be recorded in video format at the head of the optical disk 30. In this case, the head of the optical disk 30 may be read, and when the data recorded at the head of the optical disk 30 are determined to be in video format, the ensuing data may be determined to be video data. The information items recorded in video format may be information on the recorded data such as the data title and the data size, for example.

In this case, during the process of step S5, the determination unit 13 reads the head of the optical disk 30 before data recording/playback is started, and upon detecting that the data recorded at the head are in video format, determines the data to be recorded/replayed as video data that are preferably recorded/replayed in real time. On the other hand, upon detecting that the data read from the head of the optical disk 30 are not in video format, the determination unit 13 determines the data to be recorded/replayed as PC data that are preferably recorded/replayed with accuracy. The determination unit 13 then transmits its determination result to the CPU 10.

Then, in the process of step S5, the CPU 10 controls the DSP and servo unit 14, the CD/DVD system change unit 15, the CD system recording/playback control unit 16, and the DVD system recording/playback control unit 17 based on the determination result from the determination unit 13 to perform the control process for deciding the process to be executed when an error occurs during data recording/playback.

According to a first embodiment, in the control process, the CPU 10 decides the process to be executed upon occurrence of an error during data recording/playback such that when it is determined that the data to be recorded/replayed correspond to data to be recorded/replayed with accuracy, a process is selected for performing retry operations a predetermined number of times to retry the data recording/playback operations; and when it is determined that the data to be recorded/replayed correspond to data to be recorded/replayed in real time, a process is selected for ignoring the error that occurs during data recording/playback and proceeding with the data recording/playback operations.

In one example, the CPU 10 may decide to use error processes conventionally used in an optical disk drive depending on whether the data to be recorded/replayed are determined to be video data or PC data.

PC data are preferably recorded/replayed with accuracy rather than giving priority to data processing speed in the optical disk drive. Therefore, in a case where an error occurs during data recording/playback, the recording operations or the playback operations are retried a predetermined number of times.

On the other hand, video data are preferably recorded/replayed in real time on order to avoid the occurrence of interruptions and halts in the video.

Accordingly, if the data to be recorded correspond to PC data, the CPU 10 performs the retry operations a predetermined number of times upon occurrence of an error during data recording/playback. Specifically, when it is determined that the data to be recorded/replayed correspond to data to be recorded/replayed with accuracy, the CPU 10 decides to execute the process of performing retry operations a predetermined number of times upon occurrence of an error during data recording/playback to retry the recording/playback operations on an error generated area. The predetermined number (number of retries) is normally around 16, but any number may be selected as the predetermined number.

On the other hand, in the case where the data to be recorded/replayed correspond to video data, the CPU 10 does not perform the retry operations even when an error occurs during data recording/playback; that is, the CPU 10 merely identifies the error information and proceeds with the data recording/playback as if no error has occurred. In other words, notification of an error detected by the CD system recording/playback control unit 16 or the DVD system recording/playback control unit 17 is made from the CPU 10 via the interface 24 to the host computer 2, but the error is ignored by the internal processes performed within the optical disk drive 1.

In this way, when data to be recorded/replayed correspond to data to be recorded/replayed in real time, the CPU 10 may decide to use a process for ignoring an error that occurs during data recording/playback and proceeding with the recording/playback operations. In one embodiment, during playback, corresponding data for which an error occurs may be read and discarded. In this way, interruptions in video during playback may be avoided.

According to a second embodiment, in the control process, the CPU 10 decides the process to be executed upon occurrence of an error during data recording/playback such that when it is determined that the data to be recorded/replayed correspond to data to be recorded/replayed with accuracy, a process is selected for performing retry operations a predetermined number of times to retry the data recording/playback operations; and when it is determined that the data to be recorded/replayed correspond to data to be recorded/replayed in real time, a process is selected for skipping the error generated area at which an error occurs and proceeding with the data recording/playback operations.

According to this embodiment, in the case of recording PC data in the optical disk drive 1, when an error occurs during the recording operations, data reception from the host computer 2 may be halted to wait for the host computer 2 to recover from the error occurrence. Accordingly, when an error occurs during data recording, the CPU 10 may halt data reception from a PC, perform retry operations a predetermined number of times (normally 16 times), and restart the data reception from the PC after the retry operations are completed.

In the case of replaying PC data in the optical disk drive 1, the CPU 10 performs the retry operations a predetermined number of times.

Specifically, when it is determined that data to be recorded/replayed correspond to data to be recorded/replayed with accuracy, the CPU 10 decides to execute a process for performing the retry operations a predetermined number of times upon occurrence of an error during data recording/playback to retry the data recording/playback operations on the error generated area.

On the other hand, in the case of recording video data such as data transmitted from a television station, even when an error occurs at the optical disk drive 1 side receiving the data, the television station side cannot be controlled to delay data transmission to await recovery of the optical disk drive 1, so data received during execution of an error process are lost. Accordingly, in the case of recording video data, the CPU 10 skips the error generated area (error area skipping) and continues recording data on the next recording area coming after the skipped area.

In the case of replaying video data, the CPU 10 skips the error generated area (error area skipping), and continues replaying data from the next recording area coming after the skipped area.

Specifically, when it is determined that the data to be recorded/replayed correspond to data to be recorded/replayed in real time, the CPU 10 decides to execute a process for skipping an error generated area when an error occurs during data recording/playback and proceeding with the recording/playback operations.

According to the present embodiment, a defective area of the optical disk 30 at which an error occurs may be skipped and the data recording/playback operations may be continued. It is noted that the error occurrence and details thereof may be identified in this embodiment.

According to a third embodiment, in the control process, the CPU 10 decides the process to be executed upon occurrence of an error during data recording/playback such that when it is determined that the data to be recorded/replayed correspond to data to be recorded/replayed with accuracy, a process is selected for performing retry operations a predetermined number of times to retry the data recording/playback operations; and when it is determined that the data to be recorded/replayed correspond to data to be recorded/replayed in real time, a process is selected for not performing the retry operations and proceeding with the data recording/playback operations.

In this way, the quality of the PC data may be maintained and the occurrence of interruptions and stops in video may be avoided in the video data. It is noted that although a loss of a few milliseconds may be generated in the video data when an error occurs, since the time duration of the video itself is relatively long, loss of less than a few dozen milliseconds may not cause any apparent visual defects.

According to a fourth embodiment, in the control process, the CPU 10 decides the process to be executed upon occurrence of an error during data recording/playback such that when it is determined that the data to be recorded/replayed correspond to data to be recorded/replayed with accuracy, a process is selected for performing retry operations a predetermined number of times to retry the data recording/playback operations; and when it is determined that the data to be recorded/replayed correspond to data to be recorded/replayed in real time, a process is selected for performing the retry operations a number of times that is less than the predetermined number.

For example, when the data to be recorded/replayed correspond to PC data, the CPU 10 may decide to execute a process of performing retry operations a predetermined number of times (normally about 16 times) upon occurrence of an error during data recording/playback; and when the data to be recorded/replayed correspond to video data, the CPU 10 may decide to execute a process of performing the retry operations a number of times that is less than the predetermined number (e.g., five times).

In this embodiment, although data recording/playback may be interrupted, the interruption time may be reduced and data may be recorded/reproduced with more accuracy.

It is noted that an information recording/playback apparatus and an information recording/playback method according to embodiments of the present invention may be applied to other types of optical disk drives such as an MO drive that records/replays data on/from other types of optical disks such as an MO.

## Claims

1. An information recording/playback apparatus that records/replays data on/from a recording medium, the apparatus comprising:
determination means for determining before data recording/playback is started whether the data correspond to data to be recorded/replayed in real time or data to be recorded/replayed with accuracy; and
control means for deciding a process to be executed upon error occurrence during the data recording/playback based on a determination result obtained by the determination means.

2. The information recording/playback apparatus as claimed in claim 1, wherein
the determination means determines before the data recording/playback is started that the data correspond to data to be recorded/replayed in real time when predetermined information for the data are detected, and determines that the data correspond to data to be recorded/replayed with accuracy when the predetermined information is not detected.

3. The information recording/playback apparatus as claimed in claim 1 or 2, wherein
the data to be recorded/replayed in real time are video data.

4. The information recording/playback apparatus as claimed in claim 3, wherein
the video data are data compressed according to a moving image compression standard.

5. The information recording/playback apparatus as claimed in claim 2 or 4, wherein
the predetermined information is a sequence header.

6. The information recording/playback apparatus as claimed in claim 1 or 2, wherein
the control means decides to execute a process of performing a retry operation a predetermined number of times for retrying recording/playback on an error generated area upon error occurrence during the data recording/playback when it is determined that the data correspond to data to be recorded/replayed with accuracy, and decides to execute a process of performing the retry operation a number of times which number is less than the predetermined number upon error occurrence during the data recording/playback when it is determined that the data correspond to data to be recorded/replayed in real time.

7. The information recording/playback apparatus as claimed in claim 1 or 2, wherein
the control means decides to execute a process of performing a retry operation a predetermined number of times for retrying recording/playback on an error generated area upon error occurrence during the data recording/playback when it is determined that the data correspond to data to be recorded/replayed with accuracy, and decides to execute a process of not performing the retry operation and proceeding with the data recording/playback when it is determined that the data correspond to data to be recorded/replayed in real time.

8. The information recording/playback apparatus as claimed in claim 1 or 2, wherein
the control means decides to execute a process of performing a retry operation a predetermined number of times for retrying recording/playback on an error generated area upon error occurrence during the data recording/playback when it is determined that the data correspond to data to be recorded/replayed with accuracy, and decides to execute a process of ignoring an error upon error occurrence during the data recording/playback and proceeding with the data recording/playback when it is determined that the data correspond to data to be recorded/replayed in real time.

9. The information recording/playback apparatus as claimed in claim 1 or 2, wherein
the control means decides to execute a process of performing a retry operation a predetermined number of times for retrying recording/playback on an error generated area upon error occurrence during the data recording/playback when it is determined that the data correspond to data to be recorded/replayed with accuracy, and decides to execute a process of skipping the error generated area upon error occurrence during the data recording/playback and proceeding with the data recording/playback when it is determined that the data correspond to data to be recorded/replayed in real time.

10. An information recording/playback method for recording/replaying data on/from a recording medium, the method comprising:
a determination step performed before data recording/playback is started for determining whether the data correspond to data to be recorded/replayed in real time or data to be recorded/replayed with accuracy; and
a control step for deciding a process to be executed upon error occurrence during the data recording/playback based on a determination result obtained in the determination step.

11. The information recording/playback method as claimed in claim 10, wherein
the determination step determines before the data recording/playback is started that the data correspond to data to be recorded/replayed in real time when predetermined information for the data are detected, and determines that the data correspond to data to be recorded/replayed with accuracy when the predetermined information is not detected.

12. The information recording/playback method as claimed in claim 10 or 11, wherein
the data to be recorded/replayed in real time are video data.

13. The information recording/playback apparatus as claimed in claim 12, wherein
the video data are data compressed according to a moving image compression standard.

14. The information recording/playback apparatus as claimed in claim 11 or 13, wherein
the predetermined information is a sequence header.

15. The information recording/playback apparatus as claimed in claim 10 or 11, wherein
the control step decides to execute a process of performing a retry operation a predetermined number of times for retrying recording/playback on an error generated area upon error occurrence during the data recording/playback when it is determined that the data correspond to data to be recorded/replayed with accuracy, and decides to execute a process of performing the retry operation a number of times which number is less than the predetermined number upon error occurrence during the data recording/playback when it is determined that the data correspond to data to be recorded/replayed in real time.

16. The information recording/playback apparatus as claimed in claim 10 or 11, wherein
the control step decides to execute a process of performing a retry operation a predetermined number of times for retrying recording/playback on an error generated area upon error occurrence during the data recording/playback when it is determined that the data correspond to data to be recorded/replayed with accuracy, and decides to execute a process of not performing the retry operation and proceeding with the data recording/playback when it is determined that the data correspond to data to be recorded/replayed in real time.

17. The information recording/playback apparatus as claimed in claim 10 or 11, wherein
the control step decides to execute a process of performing a retry operation a predetermined number of times for retrying recording/playback on an error generated area upon error occurrence during the data recording/playback when it is determined that the data correspond to data to be recorded/replayed with accuracy, and decides to execute a process of ignoring an error upon error occurrence during the data recording/playback and proceeding with the data recording/playback when it is determined that the data correspond to data to be recorded/replayed in real time.

18. The information recording/playback apparatus as claimed in claim 10 or 11, wherein
the control means decides to execute a process of performing a retry operation a predetermined number of times for retrying recording/playback on an error generated area upon error occurrence during the data recording/playback when it is determined that the data correspond to data to be recorded/replayed with accuracy, and decides to execute a process of skipping the error generated area upon error occurrence during the data recording/playback and proceeding with the data recording/playback when it is determined that the data correspond to data to be recorded/replayed in real time.
